# EUROPÄISCHE PATENTSCHRIFT

(11) **EP 2 213 164 B1**
(45) Veröffentlichungstag und Bekanntmachung des Hinweises auf die Patenterteilung: **18.05.2016**
(21) Anmeldenummer: 10401013.7
(22) Anmeldetag: 25.01.2010
(51) Int. Cl.: A01M 7/00

(54) **Landwirtschaftliche Feldspritze**
Agricultural field spraying device
Pulvérisateur agricole à cultures

(30) Priorität: 30.01.2009 DE 102009006803
(43) Veröffentlichungstag der Anmeldung: 04.08.2010
(73) Patentinhaber: Amazonen-Werke H. Dreyer GmbH & Co. KG, 49205 Hasbergen (DE)
(72) Erfinder: Haselroth, Hanno, 49545 Tecklenburg (DE); Austermann, Stefan, 48291 Telgte (DE); Oberheide, Friedrich, 49143 Bissendorf (DE); Rahne, Florian, 49076 Osnabrück (DE)

(56) Entgegenhaltungen:
- EP-A1- 1 273 218
- EP-A1- 1 391 370
- EP-A2- 1 997 686
- EP-A2- 2 003 770
- CH-A5- 603 036
- DE-A1- 3 921 087
- DE-A1- 19 628 148
- DE-A1-102005 019 362
- DE-U1- 8 412 145
- GB-A- 2 259 637
- US-A- 4 220 998
- US-A- 4 602 742
- US-A- 4 938 242
- US-A- 5 125 576
- US-A- 5 704 546
- US-A- 6 164 560

## Beschreibung

Die Erfindung betrifft eine landwirtschaftliche Feldspritze gemäß des Oberbegriffes des Patentanspruches 1.

Eine landwirtschaftliche Feldspritze ist beispielsweise durch die US 4602742 bekannt. Die Feldspritze weist einen Flüssigkeitstank, eine Pumpe, zu Ausbringdüsen führende Flüssigkeitsleitungen und ein Rührorgan auf. Die Pumpe und das Rührorgan werden von einem Elektromotor angetrieben, der von dem elektrischen System des Zugfahrzeuges versorgt werden.

Eine weitere landwirtschaftliche Feldspritze ist beispielsweise durch die DE 39 21 087 A1 bekannt. Derartige Feldspritzen weisen eine von einer Zapfwelle eines Ackerschleppers angetriebene Pumpe auf. Über einen Druckregler wird die Ausbringmenge eingestellt. Von dem von der Pumpe erzeugten Flüssigkeitsstrom wird ein Teilstrom abgezweigt. Über diesen Teilstrom wird eine Rührleitung gespeist. Diese Rührleitung mündet im unteren Bereich des Vorratsbehälters und weist in diesem Bereich

Austrittsöffnungen auf. Der aus den Austrittsöffnungen der Rührleitung austretende Flüssigkeitsstrom wird als Rührorgan zum Aufrühren und Mischen der sich in dem Flüssigkeitstank befindlichen Flüssigkeit genutzt. Bei einem derartigen Aufbau einer Feldspritze muss die Pumpe auf die maximal mögliche Ausbringmenge ausgelegt sein. Die Pumpe fördert dann immer wesentlich mehr Flüssigkeit als tatsächlich ausgebracht wird. Die zuviel geförderte Flüssigkeitsmenge wird über den Druckregler, der als Zweigleitung ausgebildeten Rührleitung oder der Rücklaufleitung in den Flüssigkeitstank zurückgeführt. Eine derartige Einstellung der ausgebrachten Flüssigkeitsmenge ist unwirtschaftlich. Darüber hinaus ist der Wirkungsgrad des hydraulischen Rührwerks ebenfalls als gering einzustufen.

Der Erfindung liegt die Aufgabe zugrunde, einen einfach aufgebauten Flüssigkeitskreislauf und Antrieb der einzelnen Aggregate der Feldspritze, die wirtschaftlich betreibbar sind, zu schaffen.

Diese Aufgabe wird erfindungsgemäß durch die kennzeichnenden Merkmale des Anspruches 1 gelöst. Infolge dieser Maßnahmen kann die Druckregelung der Spritzbrühe und hiermit die Einstellung der ausgebrachten Flüssigkeitsmenge nur über die Pumpendrehzahl erfolgen. Alle weiteren Druckregeleinheiten und Vorrichtungen können entfallen. Es wird immer nur so viel Energie benötigt, wie für die Ausbringung der tatsächlichen Flüssigkeitsmenge wirklich erforderlich ist. Auch ist das Rühren wesentlich wirtschaftlicher, da der Wirkungsgrad von 20% beim hydraulischen Rührwerk auf etwa 80% beim elektromechanischen Rührorgan angehoben wird. Darüber hinaus kann die Rührwirkung stufenlos und annähernd verlustfrei gesteuert und an die jeweils erforderlichen Rührbedingungen angepasst werden. Darüber hinaus ist die mechanische Rührung wesentlich schonender als die hydraulische Rührung.

Eine einfache Regelung der Drehzahl der Elektromotoren lässt sich dadurch erreichen, dass den einzelnen Elektromotoren Wechselrichter zur Regelung der Drehzahl der Elektromotoren und den davon angetriebenen Elementen zugeordnet sind.

Auch die Einstellung der Ventile kann wesentlich einfacher ausgestaltet werden.

Eine einfache Ausgestaltung des Rührorgans ergibt sich dadurch, dass das Rührorgan als Propeller oder Rührflügel ausgebildet ist. Durch die Ausgestaltung des Rührorgans als Propeller oder Rührflügel wird eine schonende Rührwirkung mit einem sehr hohen Wirkungsgrad erreicht.

Um den Flüssigkeitstank über eine mit einer Pumpeinrichtung verbundenen Befüllleitung in wirtschaftlicher Weise und mit einem hohen Wirkungsgrad befüllen zu können, ist vorgesehen, dass der Eingangsseite der Befüllleitung eine elektrisch angetriebene Tauchpumpe zugeordnet ist.

Um die Tauchpumpe entsprechend der in den Flüssigkeitstank einzufüllenden Menge rechtzeitig abschalten zu können, ist vorgesehen, dass die Tauchpumpe durch eine Recheneinheit geregelt wird. Hierdurch kann auch sichergestellt werden, dass entsprechend der Zumischung von Wirkstoffen zu der Flüssigkeit entsprechend Flüssigkeit durch die Tauchpumpe in den Flüssigkeitstank gefördert wird.

Um sicherzustellen, dass nicht zu viel Flüssigkeit in den Flüssigkeitstank gepumpt wird, ist vorgesehen, dass die Tauchpumpe durch eine Recheneinheit, wenn der Flüssigkeitstank gefüllt ist, ausschaltbar ist.

Um in einfacher Weise einen Hochdruckreiniger betreiben zu können, ist vorgesehen, dass die Feldspritze einen Frischwassertank aufweist, dass an dem Frischwassertank eine elektrisch angetriebene Pumpe und/oder ein elektrisch angetriebener Hochdruckreiniger angeschlossen sind.

Eine einfache Schaltung der Ausbringdüsen lässt sich dadurch erreichen, dass den Ausbringdüsen elektrisch schaltbare Absperrventile zugeordnet sind.

Eine vorteilhafte Anordnung eines Hydraulikaggregates und dessen Antrieb bei einer Feldspritze mit einem Gestänge an dem Ausbringdüsen angeordnet sind, ist vorgesehen, dass das Gestänge aus mehreren über Hydraulikzylinder ein- und ausklappbaren Gestängeteilen besteht, dass die Hydraulikzylinder von einem eine Hydraulikpumpe aufweisenden Hydraulikaggregat betätigbar sind, dass die Hydraulikpumpe von einem Elektromotor antreibbar ist.

Eine vorteilhafte Anordnung des Hydraulikaggregates lässt sich dadurch erreichen, dass das Hydraulikaggregat am Gestänge angeordnet ist.

Eine Anpassung der Rührwirkung an die gegebenen Rührbedingungen lässt sich dadurch erreichen, dass die Leistung oder Drehzahl des Antriebs des Rührorgans in Abhängigkeit vom Füllstand des Flüssigkeitstanks durch eine Recheneinheit gesteuert wird.

Weitere Einzelheiten der Erfindung sind der Beispielsbeschreibung und den Zeichnungen zu entnehmen. Hierbei zeigen
- Fig. 1: in prinzipieller Darstellung eine gezogene Feldspritze,
- Fig. 2: den Brüheplan der erfindungsgemäßen elektrisch betriebenen Spritze in Prinzipdarstellung und
- Fig. 3: die Übersicht der elektrischen Aggregate einer landwirtschaftlichen Feldspritze in Prinzipdarstellung.

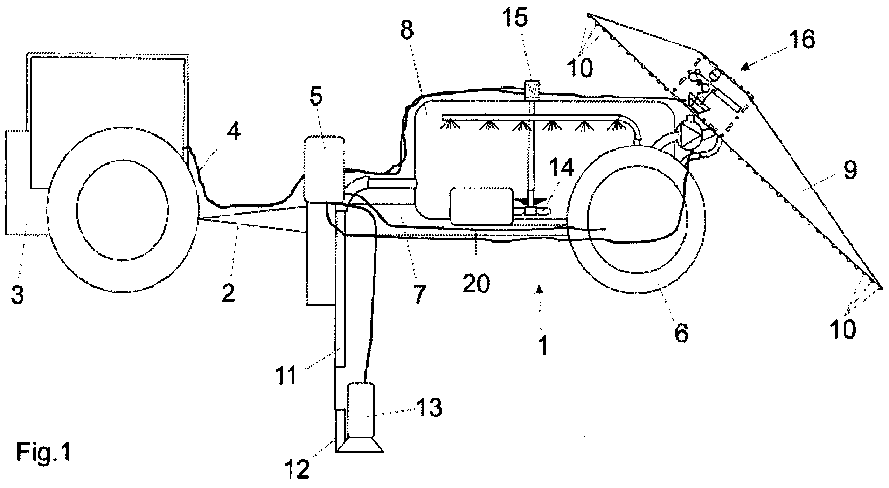

Die landwirtschaftliche Feldspritze 1 gemäß Fig. 1 ist als gezogene Spritze ausgebildet und wird über eine Anhängevorrichtung 2 an einen Ackerschlepper 3 angehängt. Die einzelnen Aggregate der Feldspritze werden, wie noch näher erläutert wird, von elektrischen Antrieben angetrieben. Hierzu wird über einen auf dem Schlepper 3 angeordneten Generator über eine elektrische Verbindungsleitung 4 elektrische Energie an eine auf der Feldspritze 1 angeordneten elektrische Verteilstation 5 übermittelt. Selbstverständlich ist es auch möglich, die elektrische Energie über einen auf der Feldspritze angeordneten Generator zu erzeugen. Dieser Generator wird dann durch einen separaten Motor oder von der Schlepperzapfwelle von dem Schlepper aus angetrieben.

Die Feldspritze weist einen sich auf Laufrädern 6 abstützenden Rahmen 7 auf. Auf dem Rahmen 7 ist ein Tank 8 zur Aufnahme der auszubringenden Flüssigkeit angeordnet. Auf der Rückseite des Rahmens 7 der Feldspritze 1 ist über eine nicht dargestellte Hebeeinrichtung das in prinzipieller Weise dargestellte Verteilergestänge 9 angeordnet. An dem Verteilergestänge 9 sind quer zur Fahrtrichtung beabstandet zueinander als Ausbringdüsen 10 ausgebildete Ausbringelemente angeordnet, denen über Flüssigkeitsleitungen die im Vorratsbehälter 8 befindliche Spritzflüssigkeit in einstellbarer Weise zugeleitet wird. Die einzelnen Aggregate der Feldspritze 1 sind von elektrischen Antrieben angetrieben. Der Flüssigkeitsbehälter 8 lässt sich über die Schlauchleitung 11 von einer an deren Anfangsende 12 angeordneten elektrisch angetriebenen Tauchpumpe 13 aus einem Flüssigkeitsreservoirs befüllen. Damit keine Flüssigkeit aus dem Flüssigkeitstank 8 über die Befüllleitung 11 und der Tauchpumpe 13 in das Flüssigkeitsreservoirs zurückfließen kann, sind in der Leitung 11 nicht dargestellte üblicher Weise verwendete Rückflusssicherungseinrichtungen angeordnet.

Dem Flüssigkeitstank 8 ist ein als Rührflügel 14 ausgebildetes mechanisches Rührwerk zugeordnet, welches von einem Elektromotor 15 angetrieben ist. Der Elektromotor 15 ist über Kabelverbindungen mit der elektrischen Verteilstation 5 verbunden.

Dem Verteilergestänge 9 ist ein Hydraulikaggregat zugeordnet. Dieses Hydraulikaggregat 16 weist eine Hydraulikpumpe 16 auf. Diese Hydraulikpumpe ist von einem Elektromotor 17 antreibbar, welcher wiederum mit Kabelverbindung mit der elektrischen Verteilstation 5 verbunden ist. Das Gestänge 9 besteht in nicht dargestellter Weise aus mehreren über Hydraulikzylinder ein- und ausklappbaren Gestängeteilen. Die Hydraulikzylinder sind mit dem Hydraulikaggregat 16 verbunden. Das Hydraulikaggregat 16 ist am Gestänge 9 angeordnet.

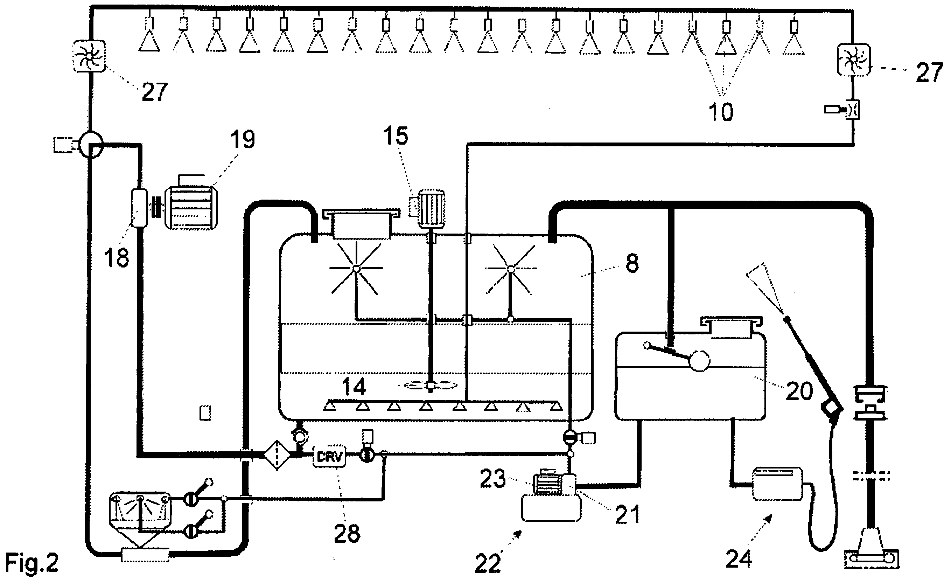

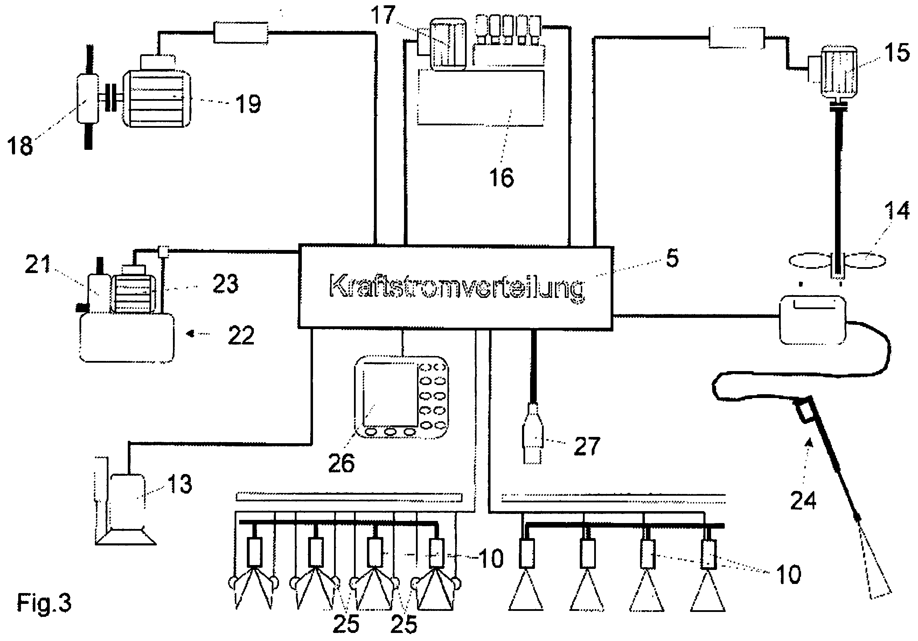

Der Feldspritze gemäß Fig. 1 ist mit einem Flüssigkeitskreislauf entsprechend der Fig. 2 ausgestattet. Wie in den Fig. 2 und 3 dargestellt ist, ist dem Flüssigkeitstank 8 das Rührwerk, welches als Propeller oder Rührflügel 14, uns somit als mechanisches Rührwerk 14 ausgebildet ist, wird von einem Elektromotor 15 angetrieben. Dieser Elektromotor 15 ist über Verbindungsleitungen mit der Kraftstromverteilung 5 verbunden. Weiterhin weist die Feldspritze 1 eine Flüssigkeitspumpe 18 für den Flüssigkeitskreislauf auf. Diese Pumpe 18 wird auch als Hauptpumpe bezeichnet und von einem Elektromotor 19 angetrieben, der ebenfalls über Verbindungsleitungen mit der Kraftstromverteilung 5 verbunden ist.

Weiterhin ist der Feldspritze 1 ein Frischwassertank 20 zugeordnet. Diesem Frischwassertank 20 ist eine elektrisch betriebene Frischwasserpumpe 21 zugeordnet. Diese Frischwasserpumpe 21 kann beispielsweise eine handelsübliche Hauswasserversorgungsanlage 22 sein. Der Elektromotor 23 der Frischwasserpumpe 21 ist ebenfalls über Verbindungsleitungen mit der Kraftstromverteilung 5 verbunden.

Dem Frischwassertank 20 ist ein Hochdruckreiniger 24 zugeordnet. Dieser Hochdruckreiniger 24 wird von einer elektrisch betriebenen Pumpe angetrieben. Der Hochdruckreiniger 24 dient zur Außenreinigung der Spritze. Der Motor des Hochdruckreinigers 24 ist über eine Kabelverbindung mit der Kraftstromverteilung 5 verbunden.

Wie bereits erwähnt, ist dem Gestänge 9 ein Hydraulikaggregat zugeordnet. Dieses Hydraulikaggregat 16 weist eine von einem Elektromotor 17 angetriebene Pumpeneinheit auf. Der Elektromotor des Hydraulikaggregates 16 über eine Kabelverbindung mit der Kraftstromverteilung 5 verbunden.

Das Verteilergestänge 9 weist Ausbringdüsen 10 auf. Den Ausbringdüsen 10 sind elektrisch schaltbare Ventile zugeordnet, die ebenfalls mit der Kraftstromverteilung 5 verbunden sind. Auch sind den Düsen 10 Beleuchtungskörper 25 zugeordnet. Diese Beleuchtungskörper 25 sind ebenfalls mit der elektrischen Stromverteilung 5 verbunden.

Des Weiteren ist eine Tauchpumpe 13, die einen Elektromotor aufweist, der ebenfalls über eine Kabelverbindung mit der Kraftstromverbindung 5 verbunden ist, vorgesehen. Diese Tauchpumpe 13 kann durch die der Elektroverteilung 5 zugeordneten elektronischen Recheneinheit 26 geregelt werden. Hierbei kann die Tauchpumpe 13 durch diese Recheneinheit 26 ausgeschaltet werden, wenn der Flüssigkeitstank 8 gefüllt ist oder der vorgegebene Füllstand erreicht ist.

In den Flüssigkeitsleitungen ist zumindest ein Durchflusssensor 27 angeordnet. Mit diesen Durchflusssensoren 27 ist der Durchfluss und somit die Ausbringmenge zu messen und zu bestimmen. Entsprechend der von den Durchflusssensoren 27 gemessenen Werte und der vorgegebenen Ausbringmenge lässt sich die Leitung oder Drehzahl der zugeordneten Antriebe der für die Flüssigkeitsausbringung verantwortlichen Pumpen 18 und Druckregelventile 28 nach Bedarf oder Vorgabe durch die Auswertung des Durchflusses durch die Recheneinheit 26 steuert.

Weiterhin können in dem System Drucksensoren angeordnet sein, die den Druck im System messen und die Leistung oder Drehzahl der zugeordneten Antriebe nach Bedarf oder Vorgabe der die Auswertung des Drucks durch die Recheneinheit 26 steuern.

Um entsprechend dem Flüssigkeitsstand und der ausgebrachten Flüssigkeit bzw. der Zusammensetzung optimal durchrühren zu können, wird die Leistung oder Drehzahl des Antriebs 15 des Rührorgans 14, d.h. des Elektromotors 15 in Abhängigkeit vom Füllstand des Flüssigkeitstanks durch eine Recheneinheit 26 entsprechend gesteuert oder geregelt werden.

Die Stromverteilereinheit 5 ist über den Stecker 27 mit der Stromerzeugeranlage, einem Generator eines Ackerschleppers verbunden. Dieser Generator erzeugt Kraftstrom mit ca. 400 Volt und einer Leistung von 25 KW und mehr.

Den einzelnen Elektromotoren können Wechselrichter zur Regelung der Drehzahl der Elektromotore zugeordnet sein.

## Patentansprüche

1. Landwirtschaftliche Feldspritze (1) zum Ausbringen von Flüssigkeiten mit zumindest einem Flüssigkeitstank (8), zumindest einer von einer Kraftquelle (19) angetriebenen Pumpe (18), zu Ausbringdüsen (10) führenden Flüssigkeitsleitungen und zumindest einem von einer Kraftquelle (15) betriebenen Rührorgan (14), wobei die jeweiligen Kraftquellen als von zumindest einem Generator gespeiste Elektromotore (13,15,19,23,24) ausgebildet sind, **dadurch gekennzeichnet, dass** in den Leitungen Durchflusssensoren (27) angeordnet sind, die den Durchfluss messen und dass die Leistung oder Drehzahl der Pumpe (18) nach Bedarf oder Vorgabe durch die Auswertung des Durchflusses durch eine Recheneinheit (26) steuerbar ist, oder, dass Drucksensoren den Druck im System messen und die Leistung oder Drehzahl der Pumpe (18) nach Bedarf oder Vorgabe durch die Auswertung des Drucks durch eine Recheneinheit (26) steuerbar ist.

2. Feldspritze nach Anspruch 1, **dadurch gekennzeichnet, dass** das Rührorgan als Propeller oder Rührflügel (14) ausgebildet ist.

3. Feldspritze nach Anspruch 1, wobei der Flüssigkeitstank über eine mit einer Pumpeinrichtung verbundene Befüllleitung befüllbar ist, **dadurch gekennzeichnet, dass** der Eingangsseite (12) der Befüllleitung (11) eine elektrisch angetriebene Tauchpumpe (3) zugeordnet ist.

4. Feldspritze nach Anspruch 3, **dadurch gekennzeichnet, dass** die Tauchpumpe (13) durch eine Recheneinheit (26) regelbar ist.

5. Feldspritze nach Anspruch 4, **dadurch gekennzeichnet, dass** die Tauchpumpe (13) durch eine Recheneinheit (26) ausschaltbar ist, wenn der Flüssigkeitstank (8) gefüllt ist.

6. Feldspritze nach Anspruch 1, **dadurch gekennzeichnet, dass** die Feldspritze einen Frischwassertank (20) aufweist, dass an dem Frischwassertank (20) eine elektrisch angetriebene Pumpe (23) und/oder ein elektrisch angetriebener Hochdruckreiniger (24) angeschlossen sind.

7. Feldspritze nach Anspruch 1, **dadurch gekennzeichnet, dass** den Ausbringdüsen (10) elektrisch schaltbare Absperrventile angeordnet sind.

8. Feldspritze nach einem oder mehreren der vorstehenden Ansprüche, **dadurch gekennzeichnet, dass** der Feldspritze ein Gestänge, an dem die Ausbringdüsen angeordnet sind, zugeordnet ist und das Gestänge (9) aus mehreren über Hydraulikzylinder ein- und ausklappbaren Gestängeteilen besteht, dass die Hydraulikzylinder von einem eine Hydraulikpumpe aufweisenden Hydraulikaggregat (16) betätigbar sind, dass die Hydraulikpumpe von einem Elektromotor (17) antreibbar ist.

9. Feldspritze nach Anspruch 8, **dadurch gekennzeichnet, dass** das Hydraulikaggregat am Gestänge angeordnet ist.

10. Feldspritze nach einem oder mehreren der vorstehenden Ansprüchen, **dadurch gekennzeichnet, dass** den einzelnen Elektromotoren (13,15,19,23,24) Wechselrichter zur Regelung der Drehzahl der Elektromotoren und den davon angetriebenen Elementen zugeordnet sind.

11. Feldspritze nach Anspruch 11 oder 12, **dadurch gekennzeichnet, dass** die Leistung oder Drehzahl des Antriebs des Rührorgans (14) in Abhängigkeit vom Füllstand des Flüssigkeitstanks durch eine Recheneinheit (26) steuerbar ist.

## Claims

1. Agricultural field spraying device (1) for discharging liquids, with at least one liquid tank (8), at least one pump (18) driven by a power source (19), liquid lines leading to discharge nozzles (10), and at least one agitator member (14) operated by a power source (15), wherein the respective power sources are designed as electric motors (13, 15, 19, 23, 24) which are fed by at least one generator, **characterized in that** flow sensors (27) which measure the flow are arranged in the lines, and **in that** the power or rotational speed of the pump (18) can be controlled, depending on the requirements or specification, by the evaluation of the flow by a computing unit (26), or **in that** pressure sensors measure the pressure in the system and the power or rotational speed of the pump (18) can be controlled, depending on requirements or specification, by the evaluation of the pressure by a computing unit (26).

2. Field spraying device according to Claim 1, **characterized in that** the agitator member is designed as a propeller or agitator blades (14).

3. Field spraying device according to Claim 1, wherein the liquid tank can be filled via a filling line connected to a pump device, **characterized in that** an electrically driven submersible pump (3) is assigned to the inlet side (12) of the filling line (11).

4. Field spraying device according to Claim 3, **characterized in that** the submersible pump (13) can be regulated by a computing unit (26).

5. Field spraying device according to Claim 4, **characterized in that** the submersible pump (13) can be switched off by a computing unit (26) when the liquid tank (8) has been filled.

6. Field spraying device according to Claim 1, **characterized in that** the field spraying device has a fresh water tank (20), **in that** an electrically driven pump (23) and/or an electrically driven high-pressure cleaner (24) are/is connected to the fresh water tank (20).

7. Field spraying device according to Claim 1, **characterized in that** electrically switchable shut off valves are arranged on the discharge nozzles (10).

8. Field spraying device according to one or more of the preceding claims, **characterized in that** the field spraying device is assigned a linkage on which the discharge nozzles are arranged, and the linkage (9) consists of a plurality of linkage parts which can be folded in and out via hydraulic cylinders, **in that** the hydraulic cylinders can be actuated by a hydraulic unit (16) having a hydraulic pump, and **in that** the hydraulic pump can be driven by an electric motor (17).

9. Field spraying device according to Claim 8, **characterized in that** the hydraulic unit is arranged on the linkage.

10. Field spraying device according to one or more of the preceding claims, **characterized in that** the individual electric motors (13, 15, 19, 23, 24) are assigned inverters for regulating the rotational speed of the electric motors and the elements driven by the latter.

11. Field spraying device according to Claim 11 or 12, **characterized in that** the power or rotational speed of the drive of the agitator member (14) can be controlled by a computing unit (26) depending on the filling level of the liquid tank.

## Revendications

1. Pulvérisateur (1) agricole servant à appliquer des liquides, présentant une cuve (8) à liquide, au moins une pompe (18) entraînée par une source de force (19), des conduits à liquide qui conduisent vers des tuyères de sortie (10) et au moins un organe de brassage (14) entraîné par une source de force (15),
les différentes sources de force étant configurées comme moteurs électriques (13, 15, 19, 23, 24) alimentés par au moins un générateur,
**caractérisé en ce que**
des capteurs de débit (27) sont disposés dans les conduits pour y mesurer le débit et
**en ce que** la puissance ou la vitesse de rotation de la pompe (18) peuvent être commandées par une unité de calcul (26) selon les besoins ou de manière prédéterminée par évaluation du débit, ou
**en ce que** des capteurs de pression mesurent la pression qui règne dans le système et
**en ce que** la puissance ou la vitesse de rotation de la pompe (18) peuvent être commandées par une unité de calcul (26) selon les besoins ou en fonction de l'évaluation de la pression.

2. Pulvérisateur selon la revendication 1, **caractérisé en ce que** l'organe de brassage est configuré comme hélice ou comme aube de brassage (14).

3. Pulvérisateur selon la revendication 1, dans lequel la cuve à liquide peut être remplie par l'intermédiaire d'un conduit de remplissage raccordé à un dispositif de pompe, **caractérisé en ce qu'**une pompe immergée (3) entraînée électriquement est associée au côté d'entrée (12) du conduit de remplissage (11).

4. Pulvérisateur selon la revendication 3, **caractérisé en ce que** la pompe immergée (13) peut être régulée par une unité de calcul (26).

5. Pulvérisateur selon la revendication 4, **caractérisé en ce que** la pompe immergée (13) peut être débranchée par une unité de calcul (26) lorsque la cuve (8) à liquide est remplie.

6. Pulvérisateur selon la revendication 1, **caractérisé en ce que** le pulvérisateur présente une cuve (20) à eau fraiche et **en ce qu'**à la cuve (20) à eau fraiche sont raccordés une pompe (23) entraînée électriquement et/ou un nettoyeur à haute pression (24) entraîné électriquement.

7. Pulvérisateur selon la revendication 1, **caractérisé en ce que** des soupapes de blocage à commande électrique sont associées aux tuyères de sortie (10).

8. Pulvérisateur selon l'une ou plusieurs des revendications précédentes, **caractérisé en ce qu'**une tringle sur laquelle sont disposées les tuyères de sortie est associée au pulvérisateur et **en ce que** la tringle (9) est constituée de plusieurs parties de tringle rabattables et déployables au moyen de vérins hydrauliques, **en ce que** les vérins hydrauliques peuvent être actionnés par un ensemble hydraulique (16) qui présente une pompe hydraulique et **en ce que** la pompe hydraulique peut être entraînée par un moteur électrique (17).

9. Pulvérisateur selon la revendication 8, **caractérisé en ce que** l'ensemble hydraulique est disposé sur la tringlerie.

10. Ensemble hydraulique selon l'une ou plusieurs des revendications précédentes, **caractérisé en ce que** des onduleurs de régulation de la vitesse de rotation des moteurs électriques et des éléments qu'ils entraînent sont associés aux différents moteurs électriques (13, 15, 19, 23, 24).

11. Pulvérisateur selon les revendications 11 ou 12, **caractérisé en ce que** la puissance ou la vitesse de rotation de l'entraînement de l'organe de brassage (14) peut être commandée en fonction de l'état de remplissage de la cuve à liquide par une unité de calcul (26).
